# EUROPÄISCHE PATENTSCHRIFT

(11) **EP 0 987 142 B1**
(45) Veröffentlichungstag und Bekanntmachung des Hinweises auf die Patenterteilung: **16.01.2008**
(21) Anmeldenummer: 99116264.5
(22) Anmeldetag: 18.08.1999
(51) Int. Cl.: B60N 2/44

(54) **Fahrzeugsitz**
Vehicle seat
Siège de véhicule

(30) Priorität: 19.09.1998 DE 19842979
(43) Veröffentlichungstag der Anmeldung: 22.03.2000
(73) Patentinhaber: Daimler AG, 70327 Stuttgart (DE)
(72) Erfinder: Vasillios, Orizaris, 71272 Renningen (DE); Pfahler, Karl, Dr., 70180 Stuttgart (DE)

(56) Entgegenhaltungen:
- EP-A- 0 586 031
- EP-A- 0 826 528
- DE-A- 4 139 580
- DE-A- 4 141 062
- DE-A- 19 616 117
- DE-C- 19 628 698
- DE-C- 19 703 516
- PATENT ABSTRACTS OF JAPAN vol. 1999, no. 01, 29. Januar 1999 (1999-01-29) & JP 10 278556 A (HONDA MOTOR CO LTD), 20. Oktober 1998 (1998-10-20)

## Beschreibung

Die Erfindung betrifft einen Fahrzeugsitz der im Oberbegriff des Patentanspruchs 1 angegebenen Gattung.

Bei einem bekannten Fahrzeugsitz dieser Art (DE 196 28 698 C1) weist das Polster eine Ventilationssschicht aus einem grobmaschigen Abstandsgewirk auf, die auf einer Polsterauflage aus Gummihaar oder Schaumstoff aufliegt und von einer luftdurchlässigen Druckverteilungsschicht überzogen ist. Zwischen der Druckverteilungsschicht und einem die Polsteroberfläche überziehenden Polsterbezug ist eine Bezugsfüllung aus einer ca. 5 - 8mm dicken Schaumsschicht, Wollwatte oder Vlies eingelegt, wobei Polsterbezug und Bezugsfüllung ebenfalls luftdurchlässig ausgeführt sind. Zwischen der Druckverteilungsschicht und der Bezugsfüllung sind elektrische Heizdrähte der Sitzheizung eingelegt und in in der Polsterauflage eingearbeiteten Luftkanälen sind Miniaturlüfter der Belüftungsvorrichtung angeordnet, die Luft an der Sitzunterseite ansaugen und in die Ventilationsschicht einblasen. Die Luft breitet sich in der Ventilationsschicht großflächig aus und strömt über die luftdurchlässigen Polsterschichten an der Sitzoberfläche aus und kühlt hier das beispielsweise durch Sonneneinstrahlung aufgeheizte Polster auf konfortable Temperaturen herunter. Bei belegtem Sitz verhindert die Belüftung des Polsters einen Wärmestau in der belegten Sitzfläche und führt Transpirationsfeuchtigkeit von der Sitzfläche ab.

Bei einem ebenfalls bekannten Fahrzeug mit Sitzheizung und Sitzbelüftungsvorrichtung (DE 197 03 516 C1) ist zur Erzielung eines hohen Sitzklimakomforts, das sowohl ein Schwitzen als auch eine Unterkühlung des Sitzbenutzers verhindert, ein Steuergerät vorgesehen, das eingangsseitig mit einem im Polster integrierten Temperaturfühler und ausgangseitig mit den elektrischen Schaltkreisen von Sitzheizung und Sitzbelüftungsvorrichtung verbunden ist. Das Steuergerät steuert in Abhängigkeit von der vom Temperaturfühler gemessenen Polsteroberflächentemperatur die Ein- und Abschaltung von Sitzheizung und Sitzbelüftungsvorrichtung nach einem vorgegebenen Steueralgorithmus.

Solche Sitzheizungen reagieren beim Einschalten recht träge, da sich die Heizelemente unter der Bezugsfüllung oder - kaschierung befinden, wobei bei Ledersitzen die Aufheizung durch die schlechte Wärmeleitung des Lederbezugs zusätzlich erschwert wird. Vor allem im Winter ist ein Verzug der Sitzheizung unangenehm zu spüren, der bis zu 3 min dauern kann.

Der Erfindung liegt die Aufgabe zugrunde, bei einem Fahrzeugsitz der eingangs genannten Art die Ansprechzeiten der Sitzheizung beim Einschalten extem zu verkürzen.

Die Aufgabe ist erfindungsgemäß durch die Merkmale des Patentanspruchs 1 gelöst.

Der erfindungsgemäße Fahrzeugsitz hat den Vorteil, daß die gezielte Kombination der Sitzbelüftung mit der Sitzheizung in der Aufheizphase die Aufheizgeschwindigkeit des Polsters verdoppelt; denn durch das Zuschalten der Sitzbelüftung, die großflächig und gleichmäßig erfolgt, wird die warme Luft, die sofort nach dem Einschalten der Sitzheizung um die Heizdrähte herum entsteht, an die Sitzoberfläche gedrückt.

Vorteilhafte Ausführungsformen des erfindungsgemäßen Fahrzeugsitzes mit zweckmäßigen Ausgestaltungen und Weiterbildungen der Erfindung ergeben sich aus den weiteren Ansprüchen.

Gemäß einer bevorzugten Ausführungsform der Erfindung ist der das Einschalten der Sitzheizung bewirkende Steuervorgang im Steuergerät so ausgelegt, daß Sitzheizung und Belüftungsvorrichtung mit voller Leistung eingeschaltet werden und die Leistung der Belüftungsvorrichtung innerhalb eines vorgegebenen Zeitintervalls asymtotisch auf einen vorgegebenen Endwert reduziert wird. Durch diese gegenseitige Abstimmung von Heizungs- und Belüftungsleistung wird ein Optimum an Aufheizgeschwindigkeit erreicht. Dabei kann der Endwert je nach Wärmeempfinden manuell vorgegeben werden.

Alternativ ist gemäß einer Ausführungsform der Erfindung der Endwert fest eingestellt und mit Erreichen des Endwerts steuert das Steuergerät die Sitzheizung und die Belüftungsvorrichtung in Abhängigkeit von der mittels eines Temperaturfühlers gemessenen Polsteroberflächentemperatur nach einem vogegebenen Steuermodus.

Die Erfindung ist anhand eines in der Zeichnung dargestellten Ausführungsbeispiels im folgenden näher beschrieben. Es zeigen:
- Fig. 1: einen Längsschnitt eines Sitzpolsters eines Fahrzeugsitzes, schematisch dargestellt,
- Fig. 2: ein Diagramm des Steuervorgangs für ein Sitzheizung und Belüftungsvorrichtung des Sitzes in Fig. 1 steuerndes Steuergerät.

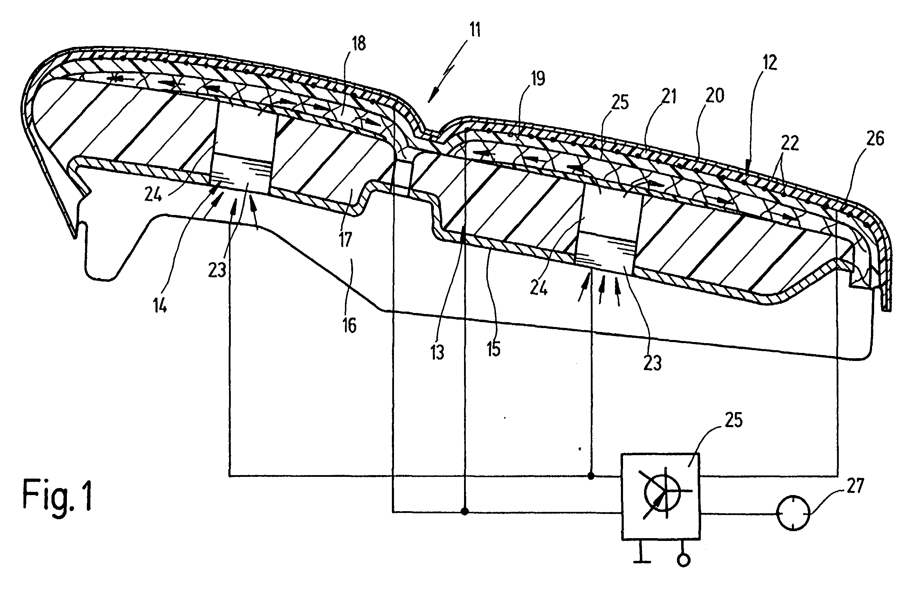

Ein Fahrzeugsitz weist in bekannter Weise ein in Fig. 1 schematisch dargestelltes Sitzteil 11, das am Fahrzeugboden verstellbar gehalten ist, und eine hier nicht dargestelle Rückenlehne auf, die zur Neigungseinstellung über eine Schwenkrasterung mit dem Sitzteil 11 verbunden ist. Das Sitzteil 11 besitzt ein Polster 13, wie es in Fig. 1 im Schnitt schematisch dargestellt ist. Das Polster der Rückenlehne kann gleich oder wenig modifiziert aufgebaut sein. Das Polster 13 ist auf einem Polsterträger 15 befestigt, der hier als ein Federkern aus Federdraht ausgebildet und in einem Rahmen 16 aufgespannt ist. Das Polster 13 umfaßt eine auf dem Polsterträger 15 aufliegende Polsterauflage 17 aus Gummihaar oder Schaumstoff, eine die Polsterauflage 17 ganzflächig überziehende, luftdurchflutbare Ventilationsschicht 18 aus einem grobmaschigen Abstandsgewirk, eine auf der Ventilationsschicht 18 aufliegende, luftdurchlässige Druckverteilungsschicht 19, die aus einem Abstandsgewirk, einem Vlies oder einem offenporigen Schaumstoff bestehen kann, und einen die dem Sitzenden zugekehrte Oberfläche des Polsters 13 überspannenden, luftdurchlässigen Polsterbezug 20. Zwischen Polsterbezug 20 und Druckverteilungsschicht 19 ist eine Bezugsfüllung 21 aus Wollwatte oder Vlies eingearbeitet. In die Bezugsfüllung sind elektrische Heizdrähte 22 einer Sitzheizung 12 eingelegt.

In der Polsterauflage 17 ist eine Mehrzahl elektrisch angetriebener Miniaturventilatoren oder Miniaturlüfter 23 einer Belüftungsvorrichtung 14 angeordnet, die Luft aus dem unterhalb des Sitzteils 11 befindlichen Bereich des Fahrzeuginnenraums ansaugen und in die Ventilationsschicht 18 blasen. Die Miniaturlüfter 23 sind in Luftkanälen 24 angeordnet, die die Polsterauflage 17 von der der Ventilationsschicht 18 zugekehrten Vorderseite bis zu der von der Ventilationsschicht 18 abgekehrten Rückseite durchdringen. Die Luftkanäle 24 sind in der Polsterauflage 17 so verteilt, daß eine möglichst gleichmäßige, flächenhafte Durchlüftung der Ventilationsschicht 18 erreichen wird. In dem Abstandsgewirk der Ventilationsschicht 18, dessen senkrechte Stege weitmaschig und ungerichtet stehen, kann sich die von den Miniaturlüftern 23 eingeblasene Luft in allen Richtungen ausbreiten und durch den Polsterbezug 20 hindurch in den Luftraum oberhalb der Sitzoberfläche ausströmen und dadurch eine rasche Abkühlung der Polsteroberfläche bewirken. Bei besetztem Sitzteil 11 streicht die Luft im Abstandsgewirk der Ventilationsschicht 18 entlang und tritt an den offenen Enden des Polsters 13 und an den unbesetzten Teilen der Polsteroberfläche aus und erzeugt dabei einen Luftfeuchtigkeitsgradienten, was die Abführung von Transpirationsfeuchtigkeit von der Sitzfläche bewirkt.

Die Sitzheizung 12 und die Belüftungsvorrichtung 14 sind an der Ausgangsseite eines Steuergeräts 25 angeschlossen, das eingangsseitig mit einem Temperaturfühler 26 verbunden ist, der im Polster 13 nahe der Polsteroberfläche angeordnet ist. Im Steuergerät 25 ist eine Temperaturregelung integriert, die mit einem eingangsseitig an dem Steuergerät 25 angeschlossenen Sollwerteinsteller 27 zusammenwirkt und die Temperatur der Polsteroberfläche auf den mit dem Sollwerteinsteller 27 vorgegebenen Sollwert einregelt.

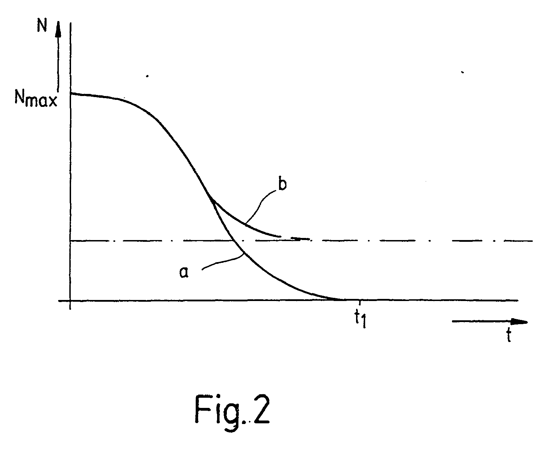

Zur schnellen Aufheizung des Sitzteils 11 ist im Steuergerät 24 ein Steueralgorithmus vorgegeben, der beim Einschalten der Sitzheizung einen solchen Steuervorgang auslöst, daß Sitzheizung 12 und Belüftungsvorrichtung 14 mit voller Leistung eingeschaltet werden und dann die Leistung der Belüftungsvorrichtung 14 innerhalb eines vorgegebenen Zeitintervalls asymtotisch auf einem vorgegebenen Endwert reduziert wird. Die Steuerkurve für den Steuervorgang ist in Fig. 2 als Funktion der Leistung N der Belüftungsvorrichtung 14 in Abhängigkeit von der Zeit t dargestellt. Zum Zeitpunkt t = 0 wird die Sitzheizung 12 eingeschaltet, und zwar mit maximaler Leistung Nₘₐₓ. Dann wird die maximale Leistung der Belüftungsvorrichtung 14, also die Leistung der Miniaturlüfter 23, innerhalb eines Zeitintervalls, das beispielsweise ca. 2 min dauert, asymtotisch auf einen Endwert abgesenkt. Bei der ausgezogen dargestellten Steuerkurve a ist dieser Endwert Null. Er kann aber auch auf jeden beliebigen anderen Endwert manuell eingestellt werden, je nach Wärmeempfinden des Benutzers. In der strichliniert dargestellten Steuerkurve b ist der Endwert fest vorgegeben und mit Erreichen des Endwerts regelt das Steuergerät 25 die Sitzheizung 12 und die Belüftungsvorrichtung 14 in Abhängigkeit von der mittels des Temperaturfühlers 26 gemessenen Polsteroberflächentemperatur nach einem vorgegebenen Steuermodus, wie er beispieslweise in der DE 197 03 516 C1 beschrieben ist. Dieser Steuermodus kann wie folgt aussehen:

Liegt die Polsteroberflächentemperatur oberhalb von z.B. 35°, so wird die Belüftungsvorrichtung 14 eingeschaltet oder auf eine höhere Leistungsstufe umgeschaltet. Unterschreitet die Polsteroberflächentemperatur diesen Wert von ca. 35°, so wird die Leistung der Belüftungsvorrichtung 14 reduziert oder gänzlich abgeschaltet.

Die Erfindung ist nicht auf das vorstehend beschriebene Ausführungsbeispiel eines Sitzteils 11 des Fahrzeugsitzes beschränkt. So kann die Rückenlehne des Fahrzeugsitzes mit einem ähnlich aufgebauten Polster und mit der gleichen Sitzheizung 12 und Belüftungsvorrichtung 14 ausgestattet sein, die in gleicher Weise von dem Steuergerät 25 gesteuert werden.

## Patentansprüche

1. Fahrzeugsitz mit einem Polster, einer in dem Polster integrierten Sitzheizung, einer Belüftungsvorrichtung zum flächenhaften Durchlüften des Polsters und einem Steuergerät zum Steuern von Sitzheizung und Belüftungsvorrichtung,
**dadurch gekennzeichnet ,**
**daß** das Steuergerät (25) mit jedem Einschalten der Sitzheizung (12) die Belüftungsvorrichtung (14) zumindest vorübergehend aktiviert.

2. Fahrzeugsitz nach Anspruch 1,
**dadurch gekennzeichnet ,**
**daß** der das Einschalten der Sitzheizung (12) bewirkende Steuervorgang im Steuergerät (25) so ausgelegt ist, daß Sitzheizung (12) und Belüftungsvorrichtung (14) mit voller Leistung eingeschaltet werden und die Leistung der Belüftungsvorrichtung (14) innerhalb eines vorgegebenen Zeitintervalls asymtotisch auf einen vorgegebenen Endwert reduziert wird.

3. Fahrzeugsitz nach Anspruch 2,
**dadurch gekennzeichnet,**
**daß** der Endwert manuell einstellbar ist.

4. Fahrzeugsitz nach Anspruch 3,
**dadurch gekennzeichnet ,**
**daß** der Endwert Null ist.

5. Fahrzeugsitz nach Anspruch 2,
**dadurch gekennzeichnet ,**
**daß** der Endwert fest eingestellt ist und mit Erreichen des Endwerts das Steuergerät (25) die Sitzheizung (12) und die Belüftungsvorrichtung (14) in Abhängigkeit von der mittels eines Temperaturfühlers (26) gemessenen Polsteroberflächentemperatur nach einem vorgegebenen Steuermodus steuert.

## Claims

1. Vehicle seat with a cushion, a seat warmer integrated in the cushion, a ventilation device for passing air through a large area of the cushion and a control unit for regulating the seat warming and ventilation equipment,
**characterised in that**
the control unit (25) activates the ventilation device (14) at least temporarily each time the seat warmer (12) is switched on.

2. Vehicle seat according to Claim 1,
**characterised in that**
the control process in the control unit (25) that switches on the seat warming (12) is designed such that the seat warming (12) and ventilation (14) devices are switched on at full power and the power of the ventilation device (14) is then reduced asymptotically to a predetermined final value within a specified time interval.

3. Vehicle seat according to Claim 2,
**characterised in that**
the said final value can be set manually.

4. Vehicle seat according to Claim 3,
**characterised in that**
the final value is zero.

5. Vehicle seat according to Claim 2,
**characterised in that**
the final value is set at a fixed level and on reaching the final value, the control unit (25) regulates the seat warming (12) and ventilation (14) devices as a function of the cushion surface temperature measured by a temperature sensor (26) in accordance with a predetermined control mode.

## Revendications

1. Siège de véhicule comprenant un coussin, un dispositif de chauffage de siège intégré dans le coussin, un dispositif de ventilation destiné à aérer à plat le coussin et un appareil de commande destiné à commander le dispositif de chauffage de siège et le dispositif de ventilation, **caractérisé en ce que** l'appareil de commande (25) active à chaque mise en marche du dispositif de chauffage de siège (12) le dispositif de ventilation (14) au moins temporairement.

2. Siège de véhicule selon la revendication 1, **caractérisé en ce que** le processus de commande effectuant la mise en marche du dispositif de chauffage de siège (12) dans l'appareil de commande (25) est dimensionné de sorte que le dispositif de chauffage du siège (12) et le dispositif de ventilation (14) sont mis en marche à plein gaz et la puissance du dispositif de ventilation (14) est réduite en l'espace d'un intervalle de temps prédéfini de façon asymptotique jusqu'à une valeur finale prédéfinie.

3. Siège de véhicule selon la revendication 2, **caractérisé en ce que** la valeur finale peut être réglée manuellement.

4. Siège de véhicule selon la revendication 3, **caractérisé en ce que** la valeur finale est zéro.

5. Siège de véhicule selon la revendication 2, **caractérisé en ce que** la valeur finale est réglée fixement et lorsque la valeur finale est atteinte, l'appareil de commande (25) commande le dispositif de chauffage de siège (12) et le dispositif de ventilation (14) en fonction de la température de la surface de coussin mesurée au moyen d'un capteur de température (26) selon un mode de commande prédéfini.
